# EUROPÄISCHE PATENTSCHRIFT

(11) **EP 1 025 048 B1**
(45) Veröffentlichungstag und Bekanntmachung des Hinweises auf die Patenterteilung: **14.10.2009**
(21) Anmeldenummer: 99941452.7
(22) Anmeldetag: 22.07.1999
(51) Int. Cl.: C02F 1/32

(54) **EINRICHTUNG ZUM ENTKEIMEN VON WASSER, WELCHES EINE SANITÄREINRICHTUNG DURCHSTRÖMT**
DEVICE FOR DISINFECTING WATER FLOWING THROUGH A SANITARY SYSTEM
EQUIPEMENT PERMETTANT LE DEGERMAGE DE L'EAU TRAVERSANT UNE INSTALLATION SANITAIRE

(30) Priorität: 21.08.1998 DE 19838005
(43) Veröffentlichungstag der Anmeldung: 09.08.2000
(73) Patentinhaber: HANSA METALLWERKE AG, 70567 Stuttgart (DE)
(72) Erfinder: GATTER, Raimond, CH-8730 Uznach (CH); KUNKEL, Horst, D-70499 Stuttgart (DE); OBERDÖRFER, Hans, D-70567 Stuttgart (DE); REICH, Erwin, D-70569 Stuttgart (DE)
(74) Vertreter: Ostertag, Ulrich
(86) Internationale Anmeldenummer: PCT/EP1999/005229
(87) Internationale Veröffentlichungsnummer: WO 2000/010924

(56) Entgegenhaltungen:
- EP-A- 0 030 011
- EP-A- 0 508 338
- DE-A- 3 117 473
- DE-A- 3 924 349
- DE-U- 29 614 998
- US-A- 3 923 663
- US-A- 4 017 734
- US-A- 5 266 215
- US-A- 5 384 032
- US-A- 5 393 419
- PATENT ABSTRACTS OF JAPAN vol. 1996, no. 07, 31. Juli 1996 (1996-07-31) -& JP 08 066677 A (HONDA HAJIME), 12. März 1996 (1996-03-12)

## Beschreibung

Die Erfindung betrifft eine Einrichtung zum Entkeimen von Wasser nach dem Oberbegriff des Patentanspruches 1.

In den letzten Jahren sind die Gefahren, die von mit Mikroorganismen, insbesondere Bakterien, Amöben oder anderen Einzellern verunreinigtem Wasser ausgehen, zunehmend deutlicher geworden. Der Entkeimung von Wasser wird daher eine erhöhte Bedeutung beigemessen. In diesem Zusammenhang wurde von Versuchen berichtet, strömendes Wasser durch Bestrahlung von UV-Licht zu entkeimen, dessen Wellenlänge geeignet ist, im Wasser mitgeführte Mikroorganismen abzutöten.

Eine derartige Entkeimung erfolgt umso vollständiger, je höher die Strahlungsenergie im zum Entkeimen wirksamen Wellenlängenbereich der UV-Strahlung ist, welche bei der Bestrahlung des zu entkeimenden Wassers auf die Mikroorganismen abgegeben wird. Diese Strahlungsenergie entspricht dem Produkt aus der Strahlungsleistung der UV-Lampe und der Verweildauer des zu entkeimenden Wassers in dem von der UV-Lampe bestrahlten Raum. Um eine bestimmte Strahlungsenergie zu erzielen, die zum Erreichen eines vorbestimmten Entkeimungsgrades erforderlich ist, ist demnach eine bestimmte Kombination aus UV-Strahlungsleistung und Verweildauer notwendig.

Ist die Verweildauer recht kurz, muß dementsprechend eine hohe Strahlungsleistung der UV-Lampe zur Verfügung stehen, um den gewünschten Entkeimungsgrad zu erzielen. UV-Lampen hoher Strahlungsleistung weisen jedoch den Nachteil auf, daß sie einerseits recht voluminös sind und damit eine Einrichtung zum Entkeimen von Wasser vergrößern, andererseits aber auch teuer sind und eine hohe elektrische Leistungsaufnahme haben. Durch die aufgenommene elektrische Leistung und zusätzlich durch die innerhalb der Einrichtung absorbierte hohe UV-Strahlungsleistung heizt sich die Einrichtung zudem auf. Beispielsweise können sich Teile des Gehäuses der Lampe so erhitzen, daß sie mit einer Wärmeisolation versehen werden müssen. Zudem kann sich das entnommene Wasser erwärmen.

Eine Wasserentkeimungseinrichtung der eingangs genannten Art ist aus der US 5 393 419 A bekannt. Bei ihr ist der Durchströmungsraum, in dem das zu entkeimende Wasser der Bestrahlung durch die UV-Lampe ausgesetzt ist, so gestaltet, daß dieser eine stabförmige UV-Lampe hohlzylinderförmig umgibt. Durch die Länge der stabförmigen UV-Lampe ist damit schon eine gewisse Verweildauer des zu entkeimenden Wassers in der Einrichtung zum Entkeimen gegeben. Andererseits wird durch die Einleitung des zu entkeimenden Wassers mit einer Geschwindigkeitskomponente in Umfangsrichtung des Durchströmungsraums eine weitere Vergrößerung der Verweildauer erzielt, da das Wasser jetzt nicht den kürzesten Weg längs der UV-Lampe nimmt, sondern diese wendelförmig umströmt.

Bei gleicher Strömungsgeschwindigkeit des zu entkeimenden Wassers in der Einrichtung wird somit die Verweildauer erhöht. Dies ermöglicht bei vorgegebener, zum Erzielen der Entkeimungswirkung erforderlicher Strahlungsenergie eine Verringerung der Strahlungsleistung.

Diese bekannte Wasserentkeimungseinrichtung ist offensichtlich zum Einbau in die zentrale Wasserversorgungsleitung gedacht. Bei ihr können zwischen dem durch die UV-Bestrahlung entkeimten Durchströmungsraum und der eigentlichen Zapfstelle für das Wasser immer noch erhebliche Leitungswege vorliegen, in denen eine Keimbildung nicht unterbunden werden kann.

Ähnliches gilt für die in der EP-A-0 508 338 und in der US-A-5 266 215 beschriebenen Wasserentkeimungseinrichtungen.

Aufgabe der vorliegenden Erfindung ist es daher, eine Einrichtung der eingangs genannten Art so weiterzubilden, daß ein vorbestimmter Entkeimungsgrad des den Benutzer erreichenden Wassers mit einer möglichst geringen UV-Strahlungsleistung erreichbar wird.

Die Aufgabe wird erfindungsgemäß mit den im Patentanspruch 1 angegebenen Mitteln gelöst.

Durch den dem Durchströmungsraum vorgeschalteten stromaufwärts gelegenen Einlaßraum mit einer Einlaßöffnung wird vermieden, daß das Wasser, das bei seiner Einleitung hohen Druck und eine Geschwindigkeitskomponenten in Umfangsrichtung aufweist, punktuell direkt auf die UV-Lampe eingeleitet wird. So wird eine die Entkeimungseffizienz vermindernde Beschädigung oder Standzeitverringerung der Lampe bei zu hohem Druck des einströmenden Wassers bzw. aufgrund von Vibrationen, die direkt auf die Lampe einströmendes Wasser verursachen würde, ausgeschlossen.
Die Formung der Einlaßöffnung kann zusätzlich dazu beitragen, dem einströmenden Wasser eine Geschwindigkeitskomponente in Umfangsrichtung des stromabwärts gelegenen Durchströmungsraums zu geben.

Als Strömungswiderstandselement ist zum einen ein Sieb eingesetzt, das von dem Wasser zumindest teilweise durchströmt wird. Die Funktion des Strömungswiderstandselements, die Verweildauer des zu entkeimenden Wassers in der Wasserentkeimungseinrichtung zu erhöhen, wird dadurch mit einem Sieben des Wassers zur Erhöhung der Reinigungswirkung verbunden.

Zum anderen wird als Strömungswiderstandselement eine Prallplatte verwendet, an der zumindest ein Teil des Wassers vorbeiströmt. Dadurch läßt sich einerseits durch die Erhöhung des Strömungswiderstandes für das zu entkeimende Wasser die Verweildauer weiter erhöhen; andererseits fördert eine derartige Prallplatte die Ausbildung einer Geschwindigkeitskomponente der Strömung in Umfangsrichtung.

Der axiale Abstand zwischen der Einlaßöffnung und dem Sieb beträgt zweckmäßig zwischen 20 und 30 mm. Bei einem derartigen Abstand hat sich nach der Einlaßöffnung eine im wesentlichen stabile Strömungswendel ausgebildet, die durch eine etwaige verwirbelnde Wirkung des Siebs nicht mehr beeinflußt wird.

Das Sieb und die Prallplatte können ein einstückiges Kunststoffteil sein.

Ein Ausführungsbeispiel der Erfindung wird nachfolgend anhand der Zeichnung näher erläutert; es zeigen:
- Figur 1: einen Wannenauslauf, der mit einer Einrichtung zur Entkeimung von durchlaufendem Wasser versehen ist;
- Figur 2: einen Schnitt durch Figur 1 gemäß Linie II-II;
- Figur 3: einen Schnitt durch Figur 1 gemäß Linie III-III;
- Figur 4: einen Schnitt durch Figur 1 gemäß Linie IV-IV; und
- Figur 5: einen Schnitt durch Figur 1 gemäß Linie V-V.

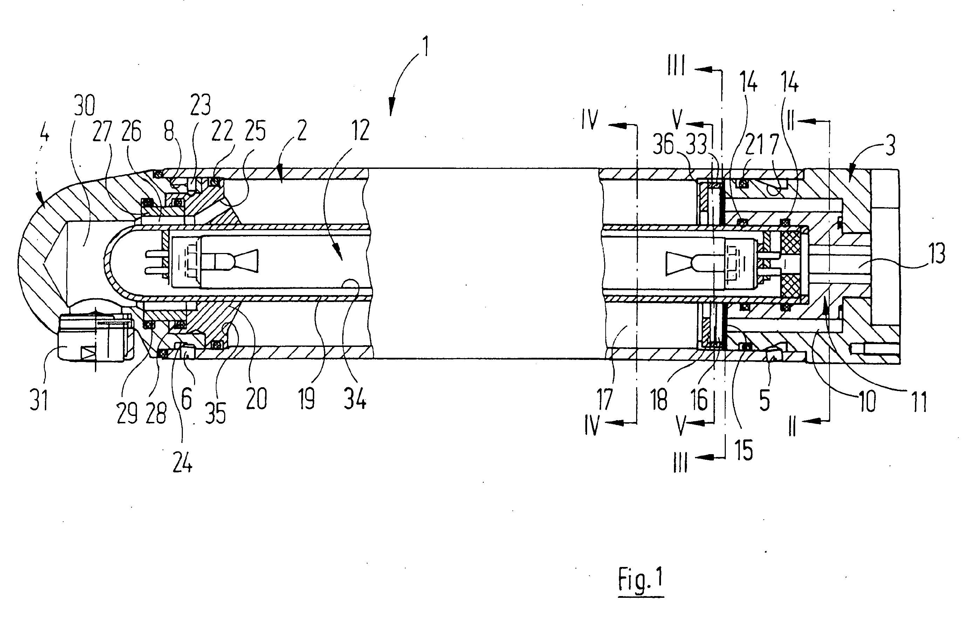

Der insgesamt mit dem Bezugszeichen 1 bezeichnete Wannenauslauf umfaßt einen im wesentlichen hohlzylindrischen Gehäusemantel 2, der an einem in der Figur 1 rechten, einer Gebäudewand benachbarten Ende durch einen Montagesockel 3 und an seinem gegenüberliegenden Ende durch einen Auslaufkopf 4 verschlossen ist. Montagesockel 3 und Auslaufkopf 4 sind jeweils durch eine den Gehäusemantel 2 durchdringende Madenschraube 5 bzw. 6 an dem Gehäusemantel 2 montiert, welche in eine Umfangsnut 7 bzw. 8 an dem Montagesockel 3 bzw. dem Auslaufkopf 4 eingreift.

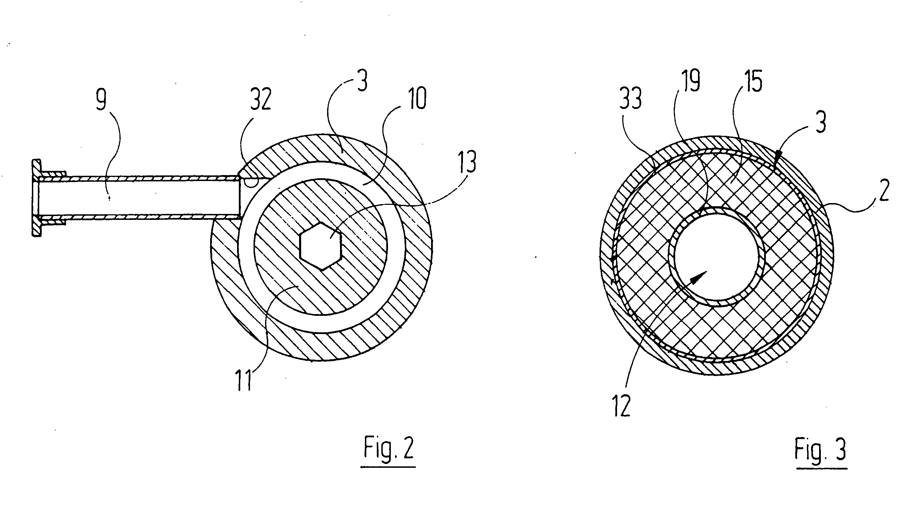

Das durch den Wahnenauslauf 1 zu entnehmende Wasser wird über einen Wasserzulaufstutzen 9 (vgl. Figur 2) zunächst in einen ringförmigen Einlaßraum 10 des Wannenauslaufs 1, der sich innerhalb des Montagesockels 3 befindet, eingeleitet. Radial innen ist der Einlaßraum 10 von einem Aufnahmesockel 11 zur Halterung einer insgesamt mit 12 bezeichneten stabförmigen UV-Lampe begrenzt. Neben der Aufnahme für die UV-Lampe 12 weist der Aufnahmesockel 11 eine Durchführung 13 für die Aufnahme elektrischer Anschlußleitungen (nicht dargestellt) der UV-Lampe 12 auf. Das dem Aufnahmesockel 11 zugewandte Ende der UV-Lampe 12 ist gegen einströmendes Wasser mittels zweier Dichtringe 14, die sich in entsprechenden inneren Umfangsnuten des Aufnahmesockels 11 befinden, abgedichtet.

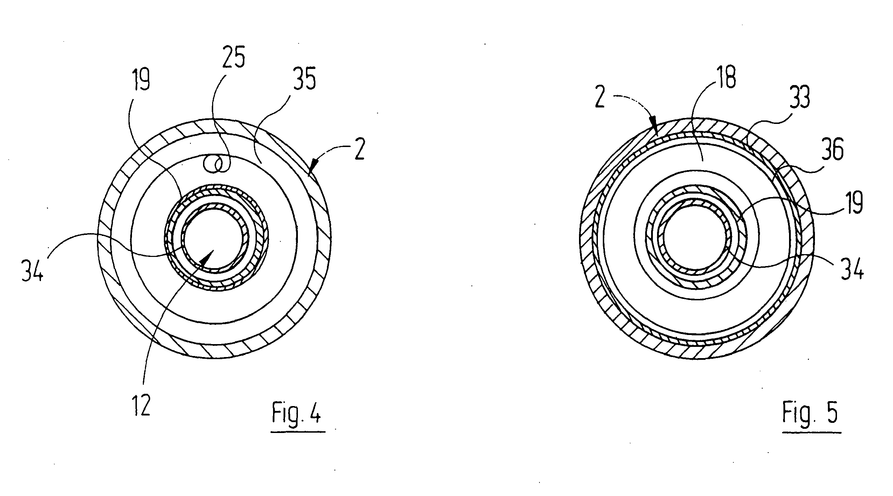

Vom Einlaßraum 10 gelangt das Wasser durch ein Sieb 15, das im Gehäusemantel 2 gehaltert ist (vgl. dazu auch die unten stehende Beschreibung der Figuren 3 und 5), in einen Vorraum 16. Beim Übergang von diesem Vorraum 16 in einen Durchströmungsraum 17 muß das Wasser den erhöhten Strömungswiderstand einer ringförmigen Prallplatte 18 überwinden, die die Strömungsfläche so verkleinert, daß sie auf einen radial innen liegenden Teilbereich der ursprünglichen Strömungsfläche begrenzt ist. Sieb 15 und Prallplatte 18 können, wie dargestellt, getrennte Teile aber auch ein einstückiges Kunststoffteil sein. Der Durchströmungsraum 17 hat im wesentlichen die Form eines Hohlzylinders, dessen äußere Mantelfläche vom Gehäusemantel 2 und dessen innere Mantelfläche von einem Schutzrohr 19 gebildet wird. Das Schutzrohr 19 ist an seinem stromaufwärts liegenden Ende vom Aufnahmesockel 11 verschlossen und an seinem stromabwärts liegenden Ende einstückig geschlossen.
Es besteht aus UV-durchlässigem Quarzglas. An seiner stromabwärts liegenden Stirnseite ist der Durchströmungsraum 17 von einem Durchgangseinsatz 20 begrenzt. Stromaufwärts gegen den Montagesockel 3 und stromabwärts gegen den Durchgangseinsatz 20 wird der Durchströmungsraum 17 durch Dichtringe 21 bzw. 22, die in entsprechenden Umfangsnuten des Montagesockels 3 bzw. des Durchgangseinsatzes 20 liegen, nach außen abgedichtet.

Der Durchgangseinsatz 20 ist durch eine den Auslaufkopf 4 durchdringende Madenschraube 23 an dem Auslaufkopf 4 festgelegt, welche in eine Umfangsnut 24 an den Durchgangseinsatz 20 eingreift.

In eine den Durchströmungsraum 17 begrenzende Stirnfläche 35 des Durchgangseinsatzes 20 mündet eine in Figur 1 oberhalb der UV-Lampe 12 liegende Durchgangsbohrung 25, die den Durchströmungsraum 17 mit einem ringförmigen Teilraum 26 verbindet. Die radiale Außenfläche des Teilraumes 26 wird von einem für UV-Licht durchlässigen Ring 27 gebildet, um den zwei Dichtringe 28 bzw. 29 angeordnet sind, die in entsprechenden Umfangsnuten des Durchgangseinsatzes 20 bzw. des Auslaufkopfes 4 liegen und den Teilraum 26 nach außen abdichten.

Vom Teilraum 26 strömt das Wasser schließlich in einen Auslaufraum 30, der vom stromabseitigen Ende des Schutzrohrs 19 und dem Auslaufkopf 4 begrenzt ist und mit einem Luftsprudler 31 kommuniziert.

Figur 2 zeigt den Montagesockel 3 und den Aufnahmesockel 11, die im Schnitt im wesentlichen ringförmig sind. Der Aufnahmesockel 11 umschließt die Durchführung 13. Zwischen dem Montagesockel 3 und dem Aufnahmesockel 11 befindet sich der Einlaßraum 10, in den der Wasserzulaufstutzen 9 durch eine Bohrung 32 des Montagesockels 3 im wesentlichen tangential einmündet.

Figur 3, bei der Details im Inneren des Schutzrohrs 19 der UV-Lampe 12 weggelassen sind, zeigt im Schnitt radial von innen nach außen die folgenden konzentrisch angeordneten Elemente: das Schutzrohr 19, das Sieb 15 und einen Winkelring 33 (vgl. auch Fig. 1) zur Aufnahme des Siebs 15 und der Prallplatte 18 innerhalb des Gehäusemantels 2. Das Sieb 15 liegt einerseits am Schutzrohr 19 und andererseits am Winkelring 33 an.

Der Schnitt der Figur 4 im Bereich des Durchströmungsraums 17 zeigt radial von innen nach außen: einen stabförmigen Lampenkörper 34 der UV-Lampe 12, das Schutzrohr 19, die stromabwärts des Durchströmungsraums 17 gelegene stromaufwärts gerichtete Stirnfläche 35 des Durchgangseinsatzes 20 mit der Durchgangsbohrung 25, sowie den Gehäusemantel 2.

Die Geometrie der Prallplatte 18 wird durch die Schnittdarstellung der Figur 5 verdeutlicht. Radial von außen nach innen sind hier dargestellt: der Gehäusemantel 2, der Winkelring 33, ein zweiteiliges Distanzelement 36 (vgl. Fig. 1), das zwischen der Prallplatte 18 und dem Sieb 15 eingefügt ist und mit seiner radialen Außenfläche an der Innenfläche des Winkelrings 33 anliegt, die Prallplatte 18, sowie das Schutzrohr 19 und den Lampenkörper 34.

Die Funktion der beschriebenen Einrichtung ist wie folgt:

Wird ein in der Zeichnung nicht dargestelltes Ventil geöffnet, so strömt Wasser über den Wasserzulaufstutzen 9 in den Einlaßraum 10. Durch die im wesentlichen tangentiale Einströmung aus dem Wasserzulaufstutzen 9 in den Einlaßraum 10 hat das strömende Wasser eine Geschwindigkeitskomponente tangential zum ringförmigen Einlaßraum 10. Das Wasser durchströmt also den Einlaßraum 10 wendelförmig.

Beim Durchströmen des Siebs 15 sowie beim Umströmen der Prallplatte 18 wird die bezogen auf den Wannenauslauf 1 axiale Geschwindigkeitskomponente des Wassers reduziert, wobei die oben beschriebene Tangentialkomponente im wesentlichen erhalten bleibt. Dies führt dazu, daß das Wasser auch den Durchströmungsraum 17 wendelförmig durchströmt. Dies hat eine Verlängerung des Strömungsweges, verglichen mit einer rein axialen Strömung, zur Folge. Bei gleichem Wasserdurchsatz durch den Wannenauslauf führt dies zu einer Erhöhung der Verweildauer des Wassers im Durchströmungsraum 17. Mikroorganismen sind einer gegebenen Strahlungsintensität also länger ausgesetzt; eine verbesserte Entkeimungswirkung ist die Folge.

## Patentansprüche

1. Einrichtung zum Entkeimen von Wasser mit
a) einem Gehäuse (2, 3, 4), welches einen Einlaß (9) und einen Auslaß (31) für das Wasser aufweist;
b) einer UV-Lampe (12) mit einem im wesentlichen stabförmigen Lampenkörper (34), die innerhalb des Gehäuses (2, 3, 4) angeordnet und deren Strahlung auf das durchströmende Wasser gerichtet ist;
c) einem im Gehäuse (2, 3, 4) angeordneten, die UV-Lampe (12) umgebenden hohlzylinderförmigen Durchströmungsraum (17) zur Führung des strömenden Wassers, der zumindest einen Bereich der UV-Lampe (12) umgibt;
d) einem dem Durchströmungsraum (17) stromaufwärts vorgeschalteten Einlaßraum (10) mit einer Einlaßöffnung (32) ;
wobei
e) der Einlaßraum (10) zum Einlaß des Wassers in den Durchströmungsraum (17) so geformt ist, daß das durch den Einlaßraum (10) einströmende Wasser eine Geschwindigkeitskomponente in Umfangsrichtung des Durchströmungsraums (17) aufweist; und
f) in dem Einlaßraum (10) und/oder dem Durchströmungsraum (17) mindestens ein Strömungswiderstandselement (15, 18) angeordnet ist, das den Strömungswiderstand des Einlaßraums (10) und/oder des Durchströmungsraums (17) für das durchströmende Wasser in axialer Richtung erhöht;
**dadurch gekennzeichnet, daß**
g) das Gehäuse (2, 3, 4) dasjenige einer Sanitäreinrichtung (1) ist;
h) das Strömungswiderstandselement umfasst:
ha) ein Sieb (15), das von dem Wasser zumindest teilweise durchströmt wird; und
hb) eine Prallplatte (18), an der zumindest ein Teil des Wassers vorbeiströmt.

2. Einrichtung nach Anspruch 1, **dadurch gekennzeichnet, daß** der bezüglich der UV-Lampe (12) axiale Abstand zwischen der Einlaßöffnung (32) und dem Sieb (15) zwischen 20 und 30 mm beträgt.

3. Einrichtung nach Anspruch 1 oder 2, **dadurch gekennzeichnet, daß** Sieb und Prallplatte ein einstückiges Kunststoffteil sind.

## Claims

1. A device for sterilizing water, having
a) a housing (2, 3, 4), which comprises an inlet (9) and an outlet (31) for the water;
b) a UV lamp (12), which is disposed inside the housing (2, 3, 4) and the radiation of which is directed towards the water flowing through, which UV lamp (12) comprises a substantially rod-shaped lamp body (34);
c) a hollow-cylindrical throughflow chamber (17) for conveying the flowing water, disposed inside the housing (2, 3, 4) and surrounding the UV lamp (12), which throughflow chamber surrounds at least one region of the UV lamp (12);
d) an inlet chamber (10), diposed upstream of the throughflow chamber (17), which inlet chamber (10) comprises an inlet opening (32);
wherein
e) the inlet chamber (10) for admitting the water into the throughflow chamber (17) is so formed that the water flowing through the inlet chamber (10) comprises a component of velocity in peripheral direction of the throughflow chamber (17); and
f) at least one flow resistance element (15, 18) is disposed in the inlet chamber (10) and/or the throughflow chamber (17), which increases the flow resistance of the inlet chamber (10) and/or of the throughflow chamber (17) for the through-flowing water in axial direction;
**characterised in that**
g) the housing (2, 3, 4) is that one of a sanitary appliance (1);
h) the flow resistance element comprises:
ha) a screen (15), through which the water at least partially flows; and
hb) a baffle plate (18), past which at least some of the water flows.

2. Device according to claim 1, **characterised in that** the, in relation to the UV lamp (12), axial clearance between the inlet opening (32) and the screen (15) is between 20 and 30 mm.

3. Device according to claim 1 or 2, **characterised in that** screen and baffle plate are an integral plastic part.

## Revendications

1. Equipement de stérilisation de l'eau, comprenant
a) un boîtier (2, 3, 4) qui présente une entrée (9) et une sortie (31) pour l'eau;
b) une lampe UV (12) avec un corps de lampe (34) essentiellement en forme de tige qui est disposée à l'intérieur du boîtier (2, 3, 4) et dont le rayonnement est dirigé vers l'eau qui traverse ledit boîtier (2, 3, 4) ;
c) une chambre de passage (17) de forme cylindrique creuse entourant la lampe UV (12) pour guider l'eau qui s'écoule, qui entoure au moins une partie de la lampe UV (12) ;
d) une chambre d'entrée (10) avec une ouverture d'entrée (32), située en amont de la chambre de passage (17) ;
dans lequel
e) la chambre d'entrée (10) permettant l'entrée de l'eau dans la chambre de passage (17) est formée de manière que l'eau arrivant par la chambre d'entrée (10) présente une composante de vitesse en direction périphérique de la chambre de passage (17) ; et
f) dans la chambre d'entrée (10) et/ou la chambre de passage (17) est disposé au moins un élément de résistance à l'écoulement (15, 18) qui augmente la résistance à l'écoulement en direction axiale de la chambre d'entrée (10) et/ou de la chambre de passage (17) pour l'eau traversante ;
**caractérisé en ce que**
g) le boîtier (2, 3, 4) est celui d'un équipement sanitaire (1) ;
h) l'élément de résistance à l'écoulement comprend :
ha) un tamis (15) qui est traversé au moins partiellement par l'eau ; et
hb) une plaque déflectrice (18) le long de laquelle s'écoule au moins une partie de l'eau.

2. Equipement selon la revendication 1, **caractérisé en ce que** la distance axiale par rapport à la lampe UV (12) entre l'ouverture d'entrée (32) et le tamis (15) est comprise entre 20 et 30 mm.

3. Equipement selon la revendication 1 ou 2, **caractérisé en ce que** tamis et plaque déflectrice sont une pièce en matière plastique d'un seul tenant.
